# EUROPEAN PATENT APPLICATION

(11) **EP 1 006 639 A1**
(43) Date of publication of application: **07.06.2000**
(21) Application number: 99204065.9
(22) Date of filing: 01.12.1999
(51) Int. Cl.: H02G 15/18, H02G 15/113

(54) **Cable sleeve and method for manufacture thereof**

(30) Priority: 01.12.1998 NL 1010691
(71) Applicant: Lovink-Enertech B.V., 7061 DT Terborg (NL)
(72) Inventor: Brus, Bernard Louis, 7007 HM Doetinchem (NL)
(74) Representative: Schumann, Bernard Herman Johan

(57) **Abstract**

A cable sleeve comprises
two shells which can be placed onto each other via respective contact surfaces and which in this situation must be mutually connected by means of coupling means such that the shells together bound a cavity which is accessible from outside via at least one cable through-feed opening and a filling opening for filling mass, both of which openings are situated in the region of the contact surfaces,
which shells are mutually connected by a hinge;
which shells and which hinge are formed together in monolithic manner from plastic, wherein the hinge is a mechanically weaker and thereby flexible zone relative to the shells.

## Description

The invention relates to a cable sleeve. Cable sleeves are known in many embodiments. The invention relates to a low-voltage sleeve, i.e. a cable sleeve suitable for application at relatively low voltage, for instance 1000 V or less.

It is an object of the invention to embody a low-voltage sleeve such that it can be manufactured simply and thereby inexpensively and can moreover be installed practically without the use of tools, while high standards of mechanical reliability, reproducibility, insulating power and sealing against outside influences are nevertheless met.

A particular embodiment has the special feature that the hinge comprises at least two lips connecting the shells. It will be apparent that due to their small dimensions two or more lips can form a zone of increased flexibility, even when relatively rigid plastic is used, whereby the hinge is formed in a natural manner such that the sleeve nevertheless forms a monolithic unit with the hinge.

An alternative, has the special feature that the hinge comprises a straight zone with reduced thickness relative to the shells. This embodiment has the advantage that the zone of the hinge is naturally fully closed, which can be advantageous for filling with curing filler and in respect of the desired liquid and moisture sealing.

This latter embodiment can advantageously be embodied such that the thickness of the hinge zone is about 0.2 - 0.5 times the thickness of the shells.

According to a determined aspect of the invention the sleeve is embodied such that a cable through-feed opening has a flexible edge which can accommodate to a positioned cable.

Since the sleeve must also be liquid-tight in the region of the cable through-feed and must therefore co-act sealingly with one or more positioned cables, the sleeve can preferably be embodied such that the edge of the cable through-feed opening of a closed sleeve has an uninterrupted peripheral part with a substantially flat, at least smooth shape to which adhesive tape can adhere sealingly.

At a preferred embodiment the flexible edge comprises a number of incisions. These incisions can be made in the edge during the moulding of the cable sleeve, but can also be made during the installation of the cable sleeve in the field. The advantage of this latter method is that the incisions only have to be applied to specific positions, through which an optimal connection of the cable through-feed to the cable can be obtained.

With another preferred embodiment of the cable sleeve according to the invention the flexible edge comprises a number of flexible fingers. These flexible fingers can be arranged during the manufacturing of the cable sleeve. The advantage hereof is that by applying the cable sleeve, even the incision of the cable through-feed can be omitted and that just only a tape has to be arranged around the openings.

Very simple to mount is a sleeve in which the coupling means comprise a clamp coupling or snap coupling. The shells can hereby be mutually coupled without using any tools and in a manner such that the desired sealing is ensured. In this respect the clamp coupling or snap coupling can preferably extend over the whole relevant periphery. In the case of a closed, straight hinge the coupling means can extend up to this hinge. Sealing over the entire periphery is thus ensured.

A preferred embodiment comprises a snap coupling with an undercut protrusion forming part of the one shell and a complementarily formed undercut recess forming part of the other shell. A very sturdy coupling is hereby ensured.

The sleeve can generally be embodied such that the coupling means comprise a protrusion forming part of the one shell and a complementarily formed recess forming part of the other shell, wherein mutually opposite standing walls of the protrusion respectively of the recess have an angle with the perpendicular to the local main plane of the relevant shell in the range of -3° to +3°, preferably -2° to +2°, more preferably -1° to +1°. It will be apparent that the stated angle values are understood to mean that in the case of a negative value there is an undercut shape, while a positive value corresponds to a clamping coupling or friction coupling.

A specific embodiment comprises a cover for covering the filling opening, which cover is formed monolithically with the sleeve and is connected to the rest of the sleeve by means of a flexible strip of material. The cover is placed on the filling opening after the installed and fully closed sleeve is filled with liquid filling mass, which is given time to cure in the sleeve. A suitable filling mass is for instance a two component-mass which cures chemically.

By means of for instance a punching process a sleeve can be realized in very simple manner in which the strip has a general zig-zag shape increasing the effective length.

A specific embodiment has the special feature that the sleeve is transparent. A transparent sleeve has the advantage that the interior of a placed sleeve can be inspected from outside, for instance before the filling mass is poured in via the filling opening. It is also possible to check whether the filling with filling mass has taken place in the correct manner, particularly without substantial air inclusions.

A further aspect of the invention relates to a method for manufacturing a cable sleeve of the above specified type, according to which method the starting point is a blank which is first modelled to the desired two-dimensional basic form, for instance by cutting, trimming or punching, which blank consists of a plastic which softens at increased temperature, for instance a thermoplastic plastic, which blank is modelled by making use of a mould to the desired three-dimensional final form by heating and pressure, for instance by thermoforming or vacuum-forming.

Yet another aspect of the invention relates to a method, according to which the plastic is chosen from the group to which belong polyolefins, PP, PE, PET, PS, optionally in modified state and optionally with additives such as ABS, softeners, reinforcing fibres or the like. It should be understood that this choice of material is not limited to thermoforming or vacuum-forming. Injection moulding or pressure-moulding are for instance also suitable techniques for producing the sleeve according to the invention.

Attention is drawn to the fact that the integral sleeve according to the invention must be arranged during placing round a cable connection such that the filling opening is preferably situated at the highest point such that filling with liquid filling mass can take place without substantial air inclusions remaining present in the sleeve.

For manufacture of the sleeve from a usual thermoplastic material, for instance polyethylene (PE), the average wall thickness can lie in the order of 1.5 mm. In the case of a film hinge this can be embodied as a straight zone with a thickness of for instance 0.7 mm.

The invention will now be elucidated with reference to the annexed drawings. Herein:
figure 1 shows a two-dimensional blank which is suitable as pre-form for manufacturing a cable sleeve according to the invention;
figure 2 shows in open situation the cable sleeve manufactured from the blank of figure 1 by for instance vacuum-forming, deep-drawing or thermoforming;
figure 3 is a perspective view of a finished and closed cable sleeve;
figure 4 shows the cable sleeve of figure 3 in which cable connections are accommodated;
figure 5 is a perspective view on enlarged scale of a part of the rear view of the sleeve according to figure 4;
figure 6 shows a filling piece for the cable through-feed in a first embodiment;
figure 7 shows a filling piece for a cable through-feed in a second embodiment;
figure 8 shows the sleeve of figure 4 after the arranging of adhesive tape over the cable through-feeds, and the filling with liquid filler and the closing of the filling opening by means of the cover;
figure 9 shows the rear view of the sleeve in the situation according to figure 8;
figure 10 is a perspective view of a sleeve according to figure 2 in another embodiment.

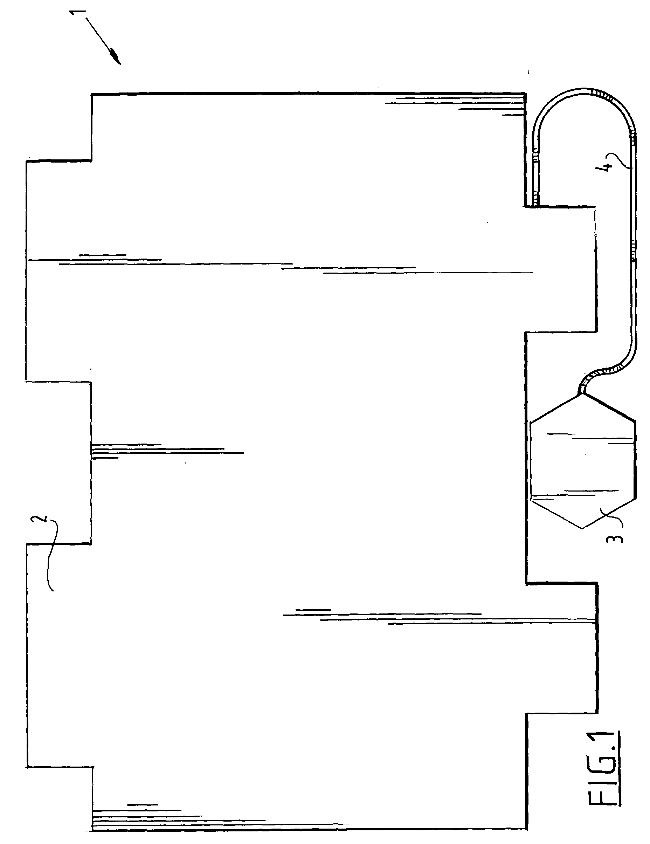

Figure 1 shows a two-dimensional pre-form or blank 1 for manufacturing a sleeve according to the invention. Blank 1 is manufactured from a plate or sheet of polyethylene with a thickness of about 1.5 mm.

Two main parts can be distinguished in the sleeve, a first part 2 intended for manufacturing two shells and a hinge connection, a second part 3 intended for manufacturing a cover and an elongate strip 4 connecting parts two and three.

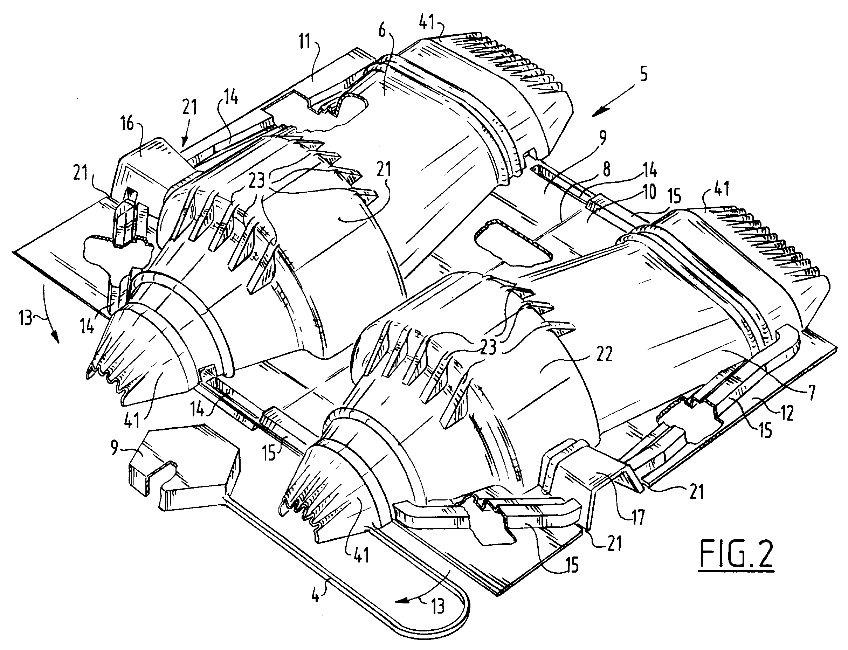

Figure 2 shows an open sleeve 5 according to the invention which is formed from blank 1 by deep-drawing, thermoforming, vacuum-forming or such suitable process. Use is preferably made in the process of the combination of heat and pressure. As is shown clearly in figure 2, the activity of the mould in question which has made the three-dimensional form according to figure 2 from the two-dimensional form according to figure 1 is limited to parts 2 and 3. The flat strip 4 is unaffected.

Sleeve 5 comprises two shells 6, 7, which are mutually connected by a straight hinge zone 8. This hinge zone is a straight zone of reduced thickness, for instance half the initial wall thickness. As a result of this weakened straight zone the relatively rigid shells 6, 7 can hinge mutually. Parts 6, 7, 8 are formed from the first part 2. A cover 9 is formed from the second part 3.

Shells 6, 7 are formed integrally with respective inner flanges 9, 10 and outer flanges 11, 12. Inner flanges 9, 10 have the hinge zone 8 in common. By mutually pivoting the shells round hinge 8 as according to arrows 13, the flanges 9, 10 and 11, 12 can be placed against each other. As figure 2 clearly shows, flanges 9, 11 have a number of protrusions, all designated with 14, while flanges 10, 12 are provided with complementarily formed recesses 15. Protrusions 14 fit into recesses 15 such that a firm coupling is hereby ensured between flanges 9, 10 and 11, 12. In the embodiment shown the protrusions 14 and recesses 15 take an undercut form with a comparatively small angle in the order of -2°. A snap coupling is hereby effectively realized, in combination with a clamp coupling or friction coupling. Protrusions 14 and recesses 15 do not extend to the region of shells 6, 7 and two parts 16, 17 which together bound the mouth of a filling opening. A number of further special features of the sleeve of figure 2 will be stated and discussed with reference to the following figures.

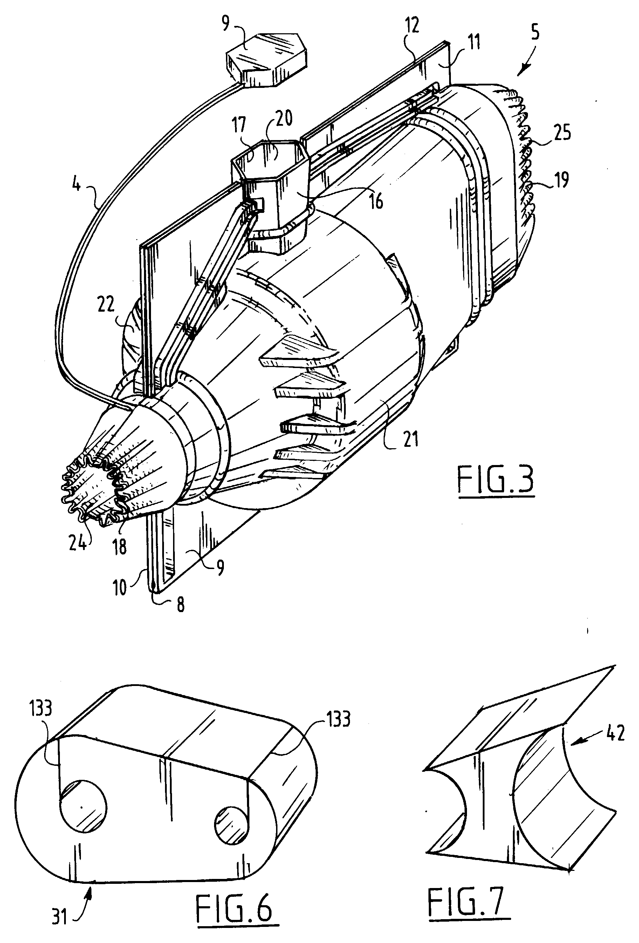

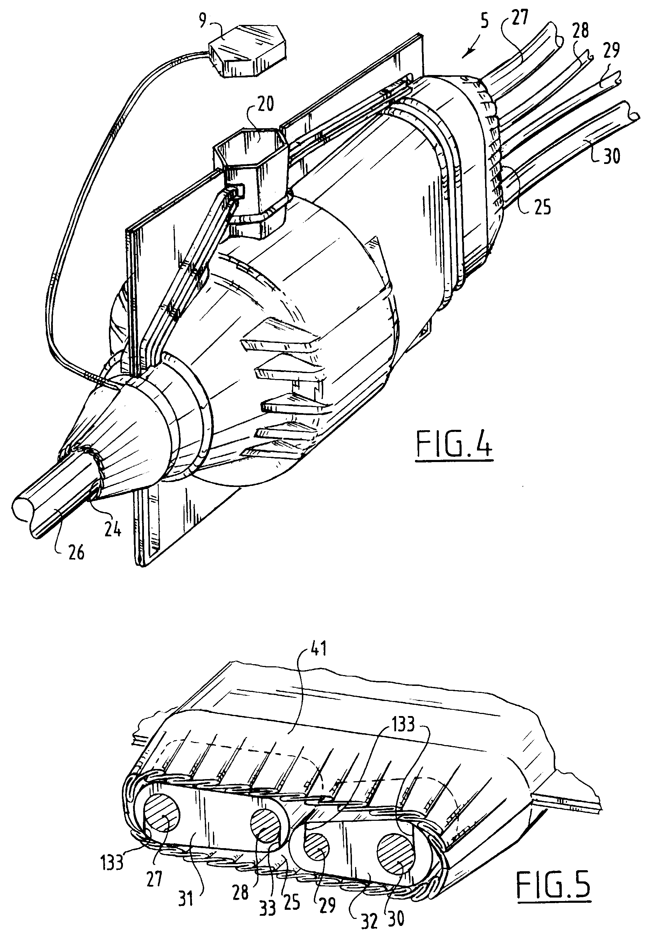

Figure 3 shows the closed sleeve 5. It will be apparent that the edges 18, 19 are embodied as pleated zones, for instance stretched during the forming of sleeve 5 according to figure 2. These edges 18, 19 hereby possess a certain flexibility and can thus easily adapt to the shape of the cable or cables to be passed through.

As figure 3 shows, the mouth edge 16, 17 of filling opening 20 is formed hexagonally and cover 9 is correspondingly shaped such that it can be placed thereover. Connecting onto mouth edge parts 16, 17 so as to enable pressing of cover 9 onto filling opening 20 are recesses which for convenience are all designated 21 and which serve to enable pressing of the cover onto mouth 16, 17 in substantially sealing manner while preserving the integral structure of flanges 11, 12.

Sleeve 5 comprises a widened zone consisting of parts 21, 22 in which positioning means can be accommodated which ensure fixation of the electrical connection between the cables and cores. Shores 23 connect onto these widened parts 21, 22 for strengthening purposes. These shores are also formed by thermoforming or the like and the shores extending more or less transversely of the main plane of the flanges are thereby provided with standing wall parts of smaller thickness.

It will further be apparent from figure 3 that protrusions 14 and recesses 15 co-act mutually such that flanges 9, 10 and 11, 12 lie very closely together. An undercut shape has the advantage in this respect that said flanges are urged toward each other in natural manner by the play of forces of the undercut structure.

A channel 46 connects the highest point of end zone 47 to filling opening 20. Air inclusions are hereby prevented.

Figure 4 again shows sleeve 5 according to figure 3. This figure 4 also shows cables 26 respectively 27, 28, 29, 30 fed through mouths 24 and 25. In the situation of figure 4 the cable sleeve has been carried from the position shown in figure 2 round the connection made beforehand between cables 26, 30, then closed and in the drawn situation is ready for liquid-tight sealing.

Figure 5 shows a rear view of a sleeve according to figure 4. Cables 27-30 are held pairwise at a mutual distance by pre-manufactured plastic filler pieces respectively 31, 32. These are for instance manufactured from a flexible plastic foam material. In order to easily accommodate the cables the continuous holes in the filler pieces are connected to the ambient via incisions 133. The cables can be inserted therethrough.

Figure 6 shows the filler piece cum spacer 31.

Figure 7 shows an alternative filler piece 42.

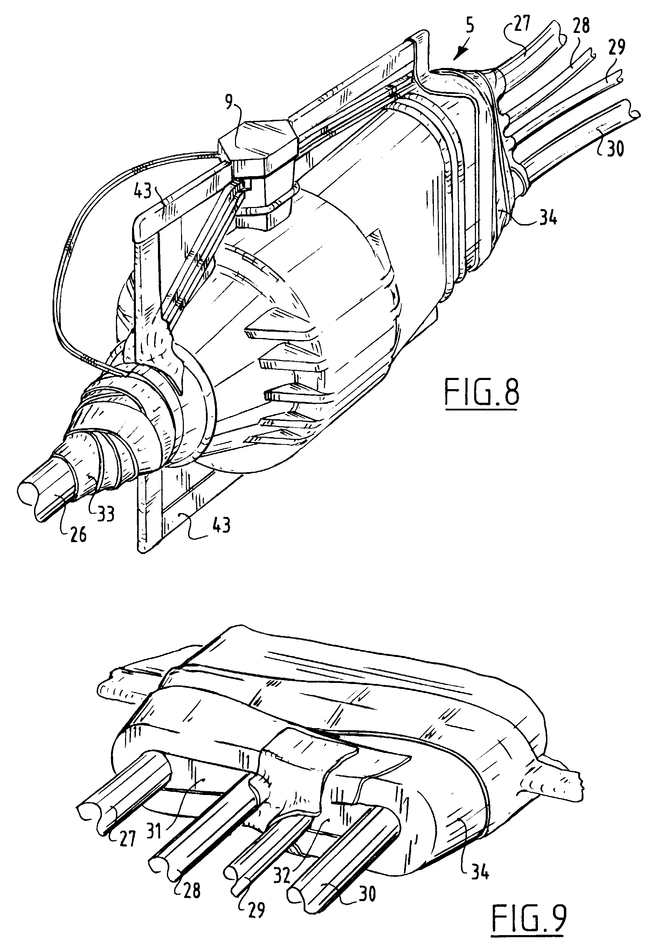

Figure 8 shows the manner in which sleeve 5 is connected liquid-tightly to cables 26, 30 in the region of mouths 24, 25 by means of adhesive tape 33, 34. Further reference is made in this respect to figure 9 together with figure 5. It will be apparent that due to the described structure liquid filler can be poured into the sleeve via filling opening 20 without this filler being able to leak anywhere out of sleeve 5, as all openings are fully closed. After said filling, cover 9 can be placed on filling opening 20 in the manner shown in figure 8. The sleeve is hereby ready for use.

Attention is once again drawn to the fact that in respect of said filling the filling opening 20 is situated at the highest point.

For the sake of completeness, attention is drawn to the fact that flanges 9, 10 and 11, 12 are likewise connected to each other by adhesive tape 43. This is not essential.

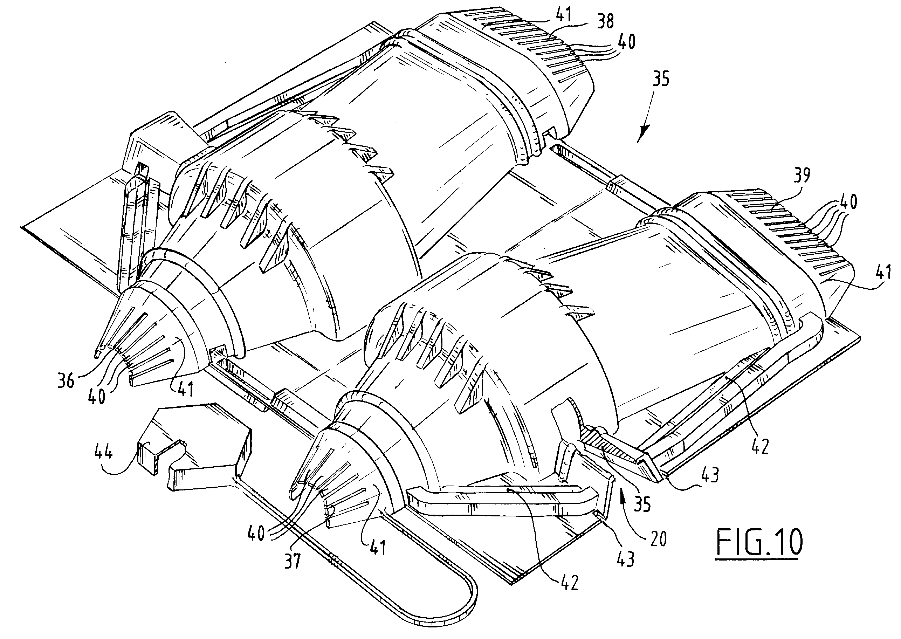

Finally, figure 10 shows an embodiment of a sleeve 35, the structure of which corresponds for a major part with that of sleeve 5. The embodiment can be manufactured by injection moulding. It is noted here that injection moulding is at this moment considered a relatively expensive manufacturing method. It is not therefore recommended in respect of the invention.

Attention is drawn to the zone 35 round filling opening 20, which has a form narrowing toward the outside. If desired, such a thickness progression can easily be realized by injection moulding.

Attention is further drawn to the fact that edges 36, 37 respectively 38, 39 which must bound cable through-feed openings in pairwise manner are embodied as a conical principal form with flexible fingers, which for the sake of convenience are all designated 40. The flexible fingers 40 have the advantage, that they follow very accurately the service of the cable, in a situation mounted around a cable. When two or more cables are fed through the same opening, then the opening will be closed very effectively by the fingers 40. Hereafter sticky tape can be, in the way as shown in figures 8 and 9, wound around the openings, as a result of which the openings become liquid tight.

Sleeves 5 and 35 have in common that substantially flat, at least smoothly progressing zones 41 connect onto the mouth openings. These smooth zones 41, which have no abrupt surface transitions, are suitable for liquid-tight sealing of the sleeve relative to the cables by means of adhesive tape.

When sleeve 35 is filled with a curing liquid in the folded-shut situation, there will be spaces in the sleeve where air remains. In order to prevent this venting ducts 42 are provided which connect these spaces to filling opening 20.

Slots 43 are further arranged round filling opening 20 whereby cover 44 can be placed simply on the filling opening. Although the cover 44 shown here is connected to the cable sleeve by means of a cord, cover 44 can also be arranged on filling opening 20 by means of a film hinge.

## Claims

1. Cable sleeve, comprising
two shells which can be placed onto each other via respective contact surfaces and which in this situation must be mutually connected by means of coupling means such that the shells together bound a cavity which is accessible from outside via at least one cable through-feed opening and a filling opening for filling mass, both of which openings are situated in the region of the contact surfaces,
which shells are mutually connected by a hinge;
which shells and which hinge are formed together in monolithic manner from plastic, wherein the hinge is a mechanically weaker and thereby flexible zone relative to the shells.

2. Cable sleeve as claimed in claim 1, wherein the hinge comprises at least two lips connecting the shells.

3. Cable sleeve as claimed in claim 1, wherein the hinge comprises a straight zone with reduced thickness relative to the shells.

4. Cable sleeve as claimed in claim 3, wherein the thickness of the hinge zone is about 0.2 - 0.5 times the thickness of the shells.

5. Cable sleeve as claimed in claim 1, wherein a cable through-feed opening has a flexible edge which can accommodate to a positioned cable.

6. Cable sleeve as claimed in claim 5, wherein the flexible edge comprises a number of incisions.

7. Cable sleeve as claimed in claim 5 or 6, wherein the flexible edge comprises a number of flexible fingers.

8. Cable sleeve as claimed in claim 1, wherein the coupling means comprise a clamp coupling or snap coupling.

9. Cable sleeve as claimed in claim 8, comprising a snap coupling with an undercut protrusion forming part of the one shell and a complementarily formed undercut recess forming part of the other shell.

10. Cable sleeve as claimed in claim 8 or 9, wherein the coupling means comprise a protrusion forming part of the one shell and a complementarily formed recess forming part of the other shell, wherein mutually opposite standing walls of the protrusion respectively of the recess have an angle with the perpendicular to the local main plane of the relevant shell in the range of - 3° to +3°, preferably -2° to +2°, more preferably -1° to +1°.

11. Cable sleeve as claimed in claim 1, comprising a cover for covering the filling opening, which cover is formed monolithically with the sleeve and is connected to the rest of the sleeve by means of a flexible strip of material.

12. Cable sleeve as claimed in claim 11, wherein the strip has a general zig-zag shape increasing the effective length.

13. Cable sleeve as claimed in claim 1, wherein the edge of the cable through-feed opening of a closed sleeve has an uninterrupted peripheral part with a substantially flat, at least smooth shape to which adhesive tape can adhere sealingly.

14. Cable sleeve as claimed in claim 1, wherein the sleeve is transparent.

15. Cable sleeve as claimed in claim 1, wherein at least one venting duct extends between a part of the cavity formed by the shells and the filling opening.

16. Method for manufacturing a cable sleeve as claimed in any of the foregoing claims, according to which method the starting point is a blank which is first modelled to the desired two-dimensional basic form, for instance by cutting, trimming or punching, which blank consists of a plastic which softens at increased temperature, for instance a thermoplastic plastic, which blank is modelled by making use of a mould to the desired three-dimensional final form by heating and pressure, for instance by thermoforming or vacuum-forming.

17. Method for manufacturing a cable sleeve as claimed in any of the claims 1-13, according to which method the cable sleeve is manufactured from a plastic chosen from the group to which belong polyolefins, PP, PE, PET, PS, optionally in modified state and optionally with additives such as ABS, softeners, reinforcing fibres or the like.
